Europäisches Patentamt

European Patent Office

Office européen des brevets

(19)

(11) Numéro de publication: **0 003 458**
**B1**

(12)

# FASCICULE DE BREVET EUROPEEN

(45) Date de publication du fascicule de brevet: **09.12.81**

(51) Int. Cl.³: **F 16 F 9/50, B 60 G 15/06,**
**F 16 F 13/00**

(21) Numéro de dépôt: **79400042.2**

(22) Date de dépôt: **23.01.79**

(54) Amortisseur pour un véhicule à suspension élastique.

(30) Priorité: **26.01.78 FR 7802171**
**12.12.78 FR 7834901**

(43) Date de publication de la demande:
**08.08.79 Bulletin 79/16**

(45) Mention de la délivrance du brevet:
**09.12.81 Bulletin 81/49**

(84) Etats Contractants Désignés:
**BE DE GB IT NL SE**

(56) Documents cités:
**BE - A - 665 817**
**DE - A - 1 665 428**
**FR - A - 952 367**
**FR - A - 1 192 844**
**FR - A - 1 341 236**
**FR - A - 1 410 579**
**FR - A - 1 553 977**
**FR - A - 2 079 874**
**FR - A - 2 118 635**
**FR - A - 2 194 267**
**FR - A - 2 324 948**
**FR - A - 2 327 465**
**FR - A - 340 482**
**US - A - 3 750 856**

(73) Titulaire: **COMMISSARIAT A L'ENERGIE ATOMIQUE Etablissement de Caractère Scientifique Technique et Industriel**
**B.P. 510**
**F-75752 Paris Cedex 15 (FR)**

(73) Titulaire: **Federspiel, Jean**
**68, Avenue Jean Moulin**
**F-75014 Paris (FR)**

(72) Inventeur: **Federspiel, Jean**
**68, Avenue Jean Moulin**
**F-75014 Paris (FR)**

(74) Mandataire: **Mongrédien, André et al,**
**c/o Brevatome 25, rue de Ponthieu**
**F-75008 Paris (FR)**

Courier Press, Leamington Spa, England.

## Amortisseur pour un véhicule à suspension élastique

La présente invention concerne un amortisseur pour un véhicule à suspension élastique. L'amortisseur comporte deux éléments associés l'un à l'autre d'une manière déformable dans le sens de la déformation de la suspension du véhicle.

Les deux éléments de l'amortisseur sont fixés respectivement en position de service à une partie suspendue et à une partie non suspendue du véhicule.

On connaît de nombreuses réalisations d'amortisseurs du genre précité, en particulier des amortisseurs hydrauliques télescopiques comprenant un piston d'amortissement monté à coulisse dans un cylindre qui contient un liquide; ce cylindre présente une première extrémité reliée à l'une des parties précitées du véhicule et le piston d'amortissement est solidaire d'une tige coulissante traversant l'autre extrémité du cylindre et assujettie à l'autre partie du véhicule. Dans le cas particulier des amortisseurs dits bi-tubes, le cylindre est placé à l'intérieur d'un corps de forme tubulaire avec lequel il communique.

La plupart des amortisseurs connus du genre que l'on vient d'indiquer donnent des résultats acceptables dans les conditions courantes d'utilisation des véhicules pour lesquels ils ont été prévus. Cependant, en particulier pour des véhicules à forte capacité de charge, et dont la suspension est très déformable, l'efficacité de l'amortissement se trouve souvent compromise avec les amortisseurs connus.

En effet, pour un charge différente de la charge moyenne normale, la position relative des deux éléments de l'amortisseur au repos peut différer largement de la position prévue par le constructeur. Il en résulte un fonctionnement anormal de l'amortisseur, et en particulier, une forte insuffisance de la course utile, dans un sens de fonctionnement.

L'inconvénient de principe que l'on vient d'exposer, lié aux variations de charge du véhicule par rapport à la charge moyenne prévue, est d'autant plus sensible que les valeurs limites possibles de la masse totale du véhicule en service présentent un écart important. En outre, pour chaque amortisseur du véhicule, une variation locale de la charge supportée par la partie correspondante de la suspension tend de même à compromettre l'efficacité de l'amortissement.

Ainsi, l'efficacité de l'ensemble des amortisseurs d'un véhicule dépend de la flexibilité de la suspension, qui peut être fortement déformée au repos, par rapport à une position moyenne prévue par construction pour chaque amortisseur. La déformation précitée de la suspension et de chaque amortisseur du véhicule au repos résulte à la fois des variations decharge et des variations de centrage du véhicule.

D'autre part, on connait du brevet français n° 952 367 une suspension comportant deux éléments élastiques distincts dont l'un assure une suspension "normale" souple lors de déplacements relatifs lents des organes reliés par la suspension et dont l'autre assure l'amortissement des chocs provenant des déplacements rapides de ces organes. Dans une telle suspension, l'élément qui assure la suspension "normale" remplit également la fonction de compensation des variations de charge du véhicule puisque celles-ci sont un cas particulier de sollicitations provoquant des déplacements lents des organes reliés par la suspension. Cependant, l'application de la structure décrite dans ce brevet à un amortisseur ne peut pratiquement pas être envisagée.

Le but de l'invention est de remédier aux inconvénients précités des amortisseurs connus, pour maintenir leur pleine efficacité dans un plage étendue de déformation possible de la suspension du véhicule au repos, en conservant la position de repos relative des deux éléments de chaque amortisseur, telle que prévue par construction, malgré les variations de charge et de centrage du véhicule.

Selon un premièr mode de réalisation, l'invention a pour objet un amortisseur pour un véhicule à suspension élastique, comportant deux éléments associés l'un à l'autre d'une manière déformable dans le sens de la déformation de la suspension du véhicule, les deux éléments de l'amortisseur étant prévus pour être reliés respectivement à une partie suspendue et à une partie non suspendue du véhicule et comprenant un piston d'amortissement monté à coulisse dans un cylindre contenant un liquide, le piston d'amortissement étant solidaire d'une tige coulissante traversant une extrémité du cylindre et étant susceptible d'être assujettie à l'une desdites parties du véhicule.

Selon l'invention, cet amortisseur est caractérisé en ce qu'il comprend un piston de compensation relié à l'autre partie du véhicule par une tige traversant l'autre extrémité du cylindre, le piston de compensation comportant au moins un disque perpendiculaire à l'axe de la tige du piston de compensation qui coopère de façon coulissante avec le cylindre, le disque étant percé dans le sens de l'axe précité par au moins un passage décalé radialement par rapport à la tige, au moins une rondelle d'obturation flexible centrée sur l'axe de la tige et sensiblement parallèle au disque présentant une bordure périphérique montée avec un jeu radial par rapport à la paroi du cylindre, ce jeu radial permettant l'écoulement du liquide par le passage lorsque la vitesse de déplacement relative entre lesdites parties du véhicule est inférieure à une vitesse limite prédéterminée, de façon à permettre le coulissement du piston de compensation dans le cylindre et à empêcher la déformation relative des deux éléments de l'amortisseur, la rondelle étant susceptible de fléchir pour venir en appui étanche contre l'une des faces du disque pour obturer le passage lorsque ladite vitesse de déplacement relative est supérieure à la vitesse limite prédéterminée de façon à empêcher le coulissement du piston de compensation dans le cylindre et à permettre la déformation relative des deux éléments de l'amortisseur, des moyens de rappel assurant au repos le maintien des deux éléments de l'amortisseur dans une position relative prédéterminée.

Grâce aux dispositions indiquées, la position de repos relative des deux éléments de l'amortisseur est conservée telle que prévue par construction, en cas d'une déformation lente de la suspension. En effet, le piston de compensation coopère dans ce but avec les moyens de rappel pour maintenir les deux éléments dans la position relative précitée.

Par contre, à partir d'une valeur limite choisie de la vitesse de déplacement relative entre les parties suspendue et non suspendue, le fonctionnement normal de l'amortisseur est assuré grâce à la venue de la rondelle en appui étanche contre le disque qui permet aux deux éléments de l'amortisseur de jouer normalement l'un par rapport à l'autre, pour assurer l'amortissement désirable de la partie suspendue du véhicule.

Comme on l'expose plus loin, les dispositions précitées permettent une réalisation industrielle efficace et économique d'un amortisseur conforme à l'invention, en particulier pour un amortisseur du genre dit "séquentiel" conforme au brevet français n° 2 079 874 et à son addition n° 2 194 267. Pour un tel amortissement séquentiel, il est en effet particulièrement important de pouvoir conserver dans tous les cas la position de repos relative des deux éléments de l'amortisseur, pour assurer constamment la pleine efficacité de celui-ci.

D'une manière avantageuse, les moyens de rappel sont prévus pour maintenir au repos le piston d'amortissement dans une position prédéterminée à l'intérieur du cylindre; ces moyens comportent au moins un ressort interposé entre le piston d'amortissement et le cylindre. De préférence, ce ressort est un ressort hélicoïdal entourant le cylindre, le ressort précité ayant une extrémité en appui sur une collerette entourant le cylindre, et l'autre extrémité en appui sur une coupelle solidaire de la tige du piston d'amortissement, et centrée sur cette tige. La collerette entourant le cylindre et la coupelle solidaire de la tige d'amortissement peuvent comporter chacune une bordure profilée formant une gorge filetée pour retenir une extrémité du ressort hélicoïdal de rappel engagée dans chacune des gorges profilées, permettant au ressort d'agir en traction et en compression entre la coupelle et la collerette précitées. Un tel amortisseur peut également comporter un fourreau de protection de la tige du piston d'amortissement, le forreau précité étant sensiblement cylindrique, coaxial à la tige et fixé à celle-ci à l'intérieur du ressort de rappel hélicoïdal par une extrémité fermée du fourreau appliquée contre la coupelle d'appui du ressort, le fourreau de protection présentant une embouchure qui recouvre l'extrémité adjacente du cylindre et peut coulisser extérieurement sur ce dernier en suivant le coulissement de la tige du piston d'amortissement.

Ce mode de montage du ressort de rappel du piston d'amortissement permet une réalisation industrielle robuste et de faible encombrement. Le ressort de rappel coopère, en outre, utilement avec les moyens élastiques normaux de la suspension du véhicule.

De préférence, selon ce premier mode de réalisation de l'invention, le piston de compensation comporte deux disques de même diamètre et percés chacun dans le sens de l'axe de la tige par au moins un passage, les deux faces internes en regard des disques étant sensiblement parallèles et séparées par un intervalle dans lequel est disposé la rondelle d'obturation flexible, cette dernière étant susceptible de fléchir pour venir en appui étanche contre l'une ou l'autre des faces internes des disques, selon le sens du déplacement relatif entre les parties du véhicule.

Lorsque la vitesse du déplacement relatif entre les parties suspendue et non suspendue du véhicule est inférieure à ladite vitesse limite, le jeu radial défini entre les bordures périphériques des disques et la paroi du cylindre permet l'écoulement du liquide par les passages formés dans les disques. La rondelle est susceptible de fléchir lorsque la vitesse du déplacement entre lesdites parties dépasse la vitesse limite. La bordure de la rondelle vient alors en appui étanche contre l'une des faces internes des disques de façon à obturer les passages formés dans ces derniers. Ceci empêche l'écoulement du liquide à travers le piston de compensation, et immobilise ce dernier dans le cylindre. Les deux éléments de l'amortisseur sont alors obligés de jouer normalement l'un par rapport à l'autre pour assurer l'amortissement de la suspension du véhicule.

Chaque face interne des deux disques du piston de compensation présente alors, de préférence, en coupe axiale, un profil courbe épousant sensiblement le profil de la rondelle élastiquement déformée en appui par sa bordure contre la face interne précitée.

Selon un deuxième mode de réalisation, l'invention a pour objet un amortisseur pour un véhicule à suspension élastique, comportant deux éléments associés l'un à l'autre d'une manière déformable dans le sens de la déformation de la suspension du véhicule, les deux éléments de l'amortisseur étant prévus pour être reliés respectivement à une partie suspendue et à une partie non suspendue du véhicule et comprenant un piston d'amortissement monté à coulisse dans un cylindre contenant un liquide, le piston d'amortissement étant solidaire d'une tige coulissante
traversant une extrémité du cylindre et
susceptible d'être assujettie à l'une desdites
parties du véhicule.

Selon l'invention, un tel amortisseur est
caractérisé en ce que le cylindre est monté à
coulisse à la fois autour du piston d'amortissement et à l'intérieur d'une chemise assujettie à
l'autre partie du véhicule, ledit cylindre étant
pourvu d'au moins un passage longitudinal et
présentant, dans sa partie comprise entre le
piston d'amortissement et son extrémité
opposée à la tige de ce dernier, au moins un
passage en regard d'une ouverture formée dans
la chemise, l'amortisseur comprenant de plus
une cloison transversale solidaire du cylindre,
cette cloison comprenant au moins un disque
percé d'au moins un passage décalé par rapport
à l'axe du disque, au moins une rondelle
d'obturation flexible centrée sur l'axe du disque
et sensiblement parallèle au disque présentant
une bordure périphérique montée avec un jeu
radial par rapport à la paroi du cylindre, ce jeu
radial permettant l'écoulement du liquide par le
passage lorsque la vitesse de déplacement
relative entre lesdites parties du véhicule est
inférieure à une vitesse limite prédéterminée de
façon à permettre le coulissement du cylindre et
de la cloison à l'intérieur de la chemise et à
empêcher la déformation relative des deux
éléments de l'amortisseur, la rondelle étant
susceptible de fléchir pour venir en appui
étanche contre l'une des faces du disque pour
obturer le passage lorsque ladite vitesse de
déplacement relative est supérieure à la vitesse
limite prédéterminée, de façon à empêcher le
coulissement du cylindre et de la cloison à
l'intérieur de la chemise et à permettre la
déformation relative des deux éléments de
l'amortisseur, des moyens de rappel assurant au
repos le maintien des deux éléments de
l'amortisseur dans une position relative
prédéterminée.

Un tel amortisseur équipe notamment les
suspensions dites type Mac Pherson des roues
avant de certaines automobiles. La chemise est
solidaire d'un corps tubulaire dont la partie
inférieure est directement reliée à la fusée de la
roue avant, tandis que la partie supérieure de ce
corps prend appui sur un ressort hélicoïdal de
suspension. La fenêtre longitudinale formée
dans le cylindre permet de supprimer l'effet
d'étranglement du piston d'amortissement au
moins sur une partie de la course du piston par
rapport à ce cylindre, tandis que le passage
ménagé dans le cylindre et l'ouverture formée
dans la chemise permettent de mettre en communication le volume interne du cylindre et le
volume annulaire compris entre la chemise et le
corps tubulaire de l'amortisseur.

En cas de déformation lente de la
suspension, le cylindre coulisse lentement à
l'intérieur de la chemise.

En cas de déformation rapide, le coulissement précité du cylindre est empêché grâce à la
venue de la rondelle en appui étanche contre le
disque et le fonctionnement normal de ce
dernier est assuré par coulissement du piston
d'amortissement dans le cylindre.

Selon une version avantageuse de ce second
mode de réalisation de l'invention, l'amortisseur
comporte dans ce cas deux ressorts
antagonistes de rappel disposés, l'un entre une
face du piston d'amortissement et une
extrémité du cylindre, et l'autre, entre l'autre
face du piston d'amortissement et l'autre
extrémité du cylindre, pour maintenir au repos le
piston d'amortissement et le cylindre dans
ladite position déterminée, dans laquelle le
piston d'amortissement est disposé au
voisinage d'une extrémité de la fenêtre longitudinale formée dans le cylindre.

Selon une version préférée de ce second
mode de réalisation de l'invention, la cloison
transversale est disposée entre le passage
formé dans le cylindre et l'extrémité de ce
dernier opposée à la tige du piston d'amortissement, le passage formé dans le disque mettant
en communication le volume interne du cylindre
au voisinage du piston d'amortissement et une
extrémité fermée de la chemise lorsque la
rondelle d'obturation n'obture pas le passage.
De préférence, la cloison transversale comprend
alors un disque et deux rondelles d'obturation
flexibles sensiblement centrées sur l'axe du
disque et disposées de part et d'autre de ce
dernier, l'une ou l'autre des rondelles étant
susceptible de fléchir pour venir en appui
étanche contre la face correspondante du
disque, selon le sens du déplacement relatif
entre lesdites parties du véhicule. Chaque face
opposée du disque peut alors présenter, en
coupe axiale, un profil courbe épousant le profil
de la rondelle élastiquement déformée en appui
contre la face précitée.

Ces dispositions permettent une réalisation
industrielle efficace et économique d'un
amortisseur conforme à l'invention.

D'autres particularités et avantages de
l'invention ressortiront encore de la description
de deux modes de réalisation présentés ci-après
à titre d'exemples non limitatifs, en référence
aux dessins annexés, dans lesquels:

— la figure 1 est une vue schématique en
coupe axiale d'un mode de réalisation de
l'invention, dans le cas d'un amortisseur
hydraulique télescopique;

— la figure 2, analogue à la figure 1,
représente une variante de l'invention pour un
montage inversé de l'amortisseur;

— les figures 3 et 4 sont des vues en coupe
axiale agrandie du piston de compensation de
l'amortisseur de la figure 1, respectivement au
repos et en position d'obturation de la rondelle
flexible, correspondant à un mouvement
d'allongement rapide de l'amortisseur;

— la figure 5 est une vue en élévation, avec
arrachements et coupe longitudinale partielle
d'un second mode de réalisation de l'invention, illustrant l'application de l'invention à un amortisseur destiné à équiper une suspension type Mac Pherson;

— la figure 6 est une vue à grande échelle du détail A de la figure 5;

— la Figure 7 est une vue à grande échelle du détail B de la Figure 5;

— la Figure 8 est une vue à grande échelle du détail C de la Figure 5;

— la Figure 9 est une vue en demi-coupe longitudinale du cylindre et de la chemise selon la Figure 5, la tige du piston étant en position d'extension maximale; et

— la Figure 10 est une vue analogue à la Figure 9, la tige du piston étant en position de compression maximale.

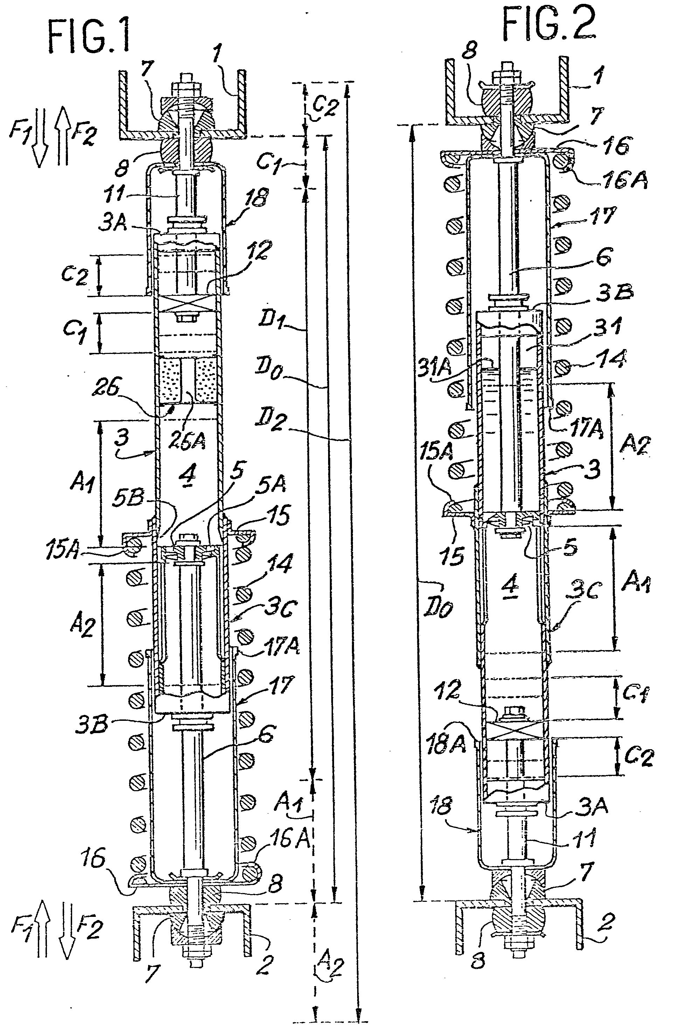

Comme on le voit sur la Figure 1, l'amortisseur pour un véhicule (non représenté) est associé à un système (non représenté) de suspension élastique du véhicule. L'amortisseur comporte deux éléments décrits plus loin, associés l'un à l'autre d'une manière déformable, dans le sens de la déformation de la suspension du véhicule, cette déformation correspondant soit à un rapprochement (Flèches F1), soit à un éloignement (Flèches F2) d'une partie suspendue 1 et d'une partie non suspendue 2 de la structure du véhicule. Comme on l'expose ci-après, les deux éléments de l'amortisseur sont respectivement fixés à la partie suspendue 1 et à la partie non suspendue 2 du véhicule.

Dans le mode de réalisation de la Figure 1, l'amortisseur est, par exemple, un amortisseur hydraulique télescopique, comportant un cylindre 3 qui contient un liquide 4, tel qu'une huile minérale incongelable et à l'épreuve du vieillissement. Le cylindre 3 est entouré sur une partie de sa hauteur d'une chemise 3C. Une première extrémité 3A du cylindre 3 est reliée, par exemple, à la partie suspendue de la structure du véhicule, comme on l'explique plus loin.

Un piston d'amortissement 5, monté à coulisse dans le cylindre 3, est solidaire d'une tige coulissante d'amortissement 6 traversant l'autre extrémité 3B du cylindre 3.

Le cylindre 3 et la tige d'amortissement 6 constituent les deux éléments principaux de l'amortisseur.

Par exemple, le piston d'amortissement 5 (Figure 1) comporte un clapet 5A à étranglement variable, conforme au brevet français n° 75 30944. Le clapet 5A permet d'obtenir une efficacité d'amortissement particulière, dans le cas d'un amortisseur du type "séquentiel" déjà mentionné.

Le fonctionnement pleinement efficace de l'amortisseur séquentiel précité suppose que le piston d'amortissement 5 au repos se trouve dans une position prédéterminée, en regard d'une zone de transition 5B de la paroi interne du cylindre 3. La zone de transition 5B sépare deux régions de la paroi interne du cylindre 3, correspondant ou non à un coulissement étanche du piston d'amortissement 5. Il en résulte des effets différents, selon que le coulissement du piston a lieu dans le sens du raccourcissement ou de l'allongement de l'amortisseur (Flèches F1, F2).

Ainsi qu'on l'a représenté à titre d'exemple sur la Figure 1, le piston d'amortissement 5 se trouve dans sa position de repos précitée, en regard de la zone de transition 5B de la paroi interne du cylindre 3, pour une valeur "Do" de la longueur de montage de l'amortisseur, entre les parties 1 et 2 de la structure du véhicule, dans le cas d'une déformation moyenne de la suspension élastique (non représentée) correspondant à des valeurs moyennes de la charge et de l'assiette du véhicule, lui-même au repos.

La tige d'amortissement 6 (Figure 1) assujettie par exemple à la partie non suspendue 2 du véhicule, y est fixée de préférence au moyen d'une attache orientable comportant une rotule 7 et un bloc élastique annulaire 8, par exemple en caoutchouc, travaillant en compression, pour faciliter les débattements angulaires de la tige d'amortissement 6.

Conformément à l'invention, l'un des éléments de l'amortisseur comporte des moyens de compensation permettant une déformation lente de l'élément précité, pour compenser une déformation lente de la suspension du véhicule, correspondant par exemple à un rapprochement des deux parties 1, 2 (Flèches F1). Des moyens de blocage sont prévus pour empêcher la déformation de l'élément précité de l'amortisseur, lorsque la vitesse de déformation tend à dépasser une valeur limite choisie par construction. En outre, des moyens de rappel sont prévus pour assurer au repos le maintien des deux éléments de l'amortisseur dans la position relative prédéterminée déjà mentionnée, telle que représentée par exemple sur la Figure 1.

On expose plus loin un mode de réalisation des moyens de rappel et des moyens de blocage précités, ainsi qu'un mode de détermination et de réglage de la vitesse limite de déformation de l'élément précité de l'amortisseur.

Dans le mode de réalisation représenté à titre d'exemple sur les Figures 1, 3 et 4, la première extrémité 3A du cylindre 3 de l'amortisseur hydraulique télescopique qui vient d'être décrit est reliée à la partie correspondante du véhicule, telle que la partie suspendue 1, par une autre tige coulissante 11 d'un piston de compensation 12, monté à coulisse dans le cylindre 3.

Le montage de la tige de compensation 11 sur la partie suspendue 1 est analogue à celui de la tige d'amortissement 6 sur la partie non suspendue 2 (Figure 1).

Le piston de compensation 12 comporte au moins un passage décrit plus loin pour l'écoulement du liquide 4 à travers le piston. Un clapet d'obturation également décrit plus loin, est associé au passage précité du piston de compensation 12, et asservi à des moyens de détection de la vitesse d'écoulement du liquide dans le passage, pour obturer celui-ci lorsque la vitesse d'écoulement du liquide tend à dépasser, un valeur qui correspond à la vitesse limite de déformation choisie pour l'amortisseur.

Dans le mode de réalisation de la Figure 1, les moyens de rappel sont prévus pour maintenir au repos le piston d'amortissement 5, dans sa position prédéterminée, en regard de la zone de transition 5B, dans le cylindre 3 de l'amortisseur télescopique.

La position de repos précitée du piston 5 correspond à la longueur de montage "Do" de l'amortisseur entre les deux parties 1, 2, du véhicule, pour une charge normale de celui-ci.

D'une manière avantageuse, les moyens de rappel du piston d'amortissement 5 comportent un ressort 14, distinct du ressort de suspension (non représenté), ayant une extrémité assujettie à la tige 6 du piston d'amortissement; la tige 6 est fixée en position de service à l'une des parties du véhicule, telle que la partie non suspendue 2.

De préférence, le ressort de rappel 14 est un ressort hélicoïdal entourant le cylindre 3. Une extrémité du ressort 14 est en appui sur une collerette 15 ceinturant le cylindre 3, et l'autre extrémité du ressort 14 est en appui sur une coupelle 16 solidaire de la tige d'amortissement 6, et centrée sur cette tige.

D'une manière avantageuse, la collerette 15 entourant le cylindre 3, et la coupelle 16 solidaire de la tige d'amortissement 6 comportent chacune une bordure profilée 15A, 16A.

Chacune des bordures profilées 15A, 16A, forme une gorge filetée, pour retenir une extrémité du ressort hélicoïdal de rappel 14. Ceci permet au ressort 14 d'agir indifféremment en compression ou en traction, entre la coupelle 16 et la collerette 15, comme on l'explique plus loin.

L'amortisseur télescopique représenté sur la Figure 1 comporte avantageusement un fourreau coulissant 17, pour protéger la tige d'amortissement 6, et un autre fourreau coulissant 18 pour protéger la tige de compensation 11. Les deux fourreaux 17, 18, présentent chacun une embouchure 17A, 18A, qui recouvre l'extrémité adjacente 3B, 3A, du cylindre 3, et peut coulisser sur le cylindre 3 en suivant le coulissement de la tige 6, 11, sur laquelle est fixé le fourreau.

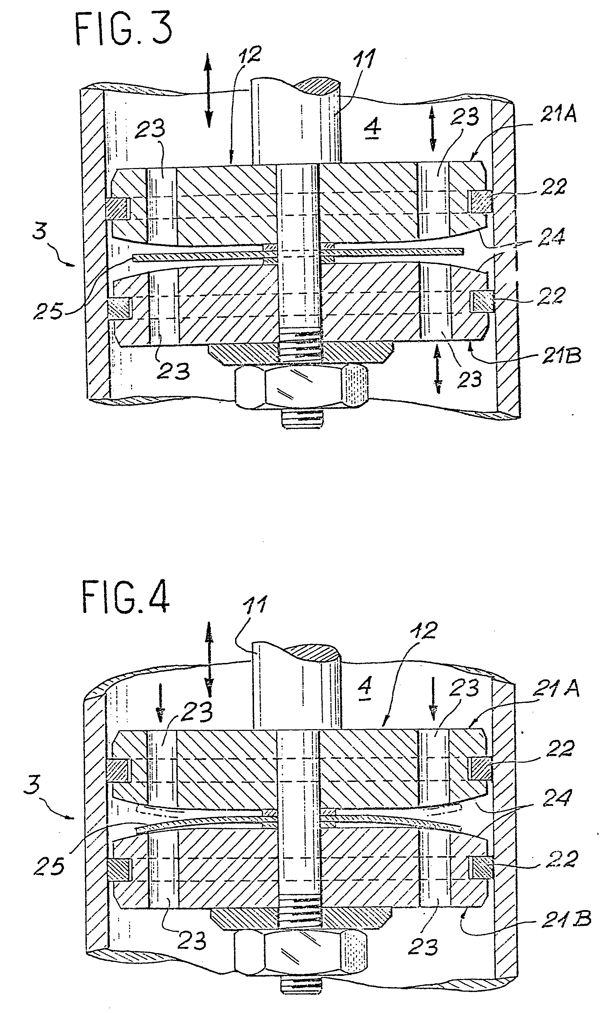

Le fourreau 17 protégeant la tige d'amortissement 6 est monté à l'intérieur du ressort de rappel hélicoïdal 14, dont il facilite le guidage par rapport au cylindre 3. Le piston de compensation 12, schématisé sur la Figure 1, et représenté plus en détail sur les Figures 3 et 4, comporte deux disques 21A, 21B, de même diamètre, perpendiculaires à l'axe de la tige 11. Chaque disque 21, monté à coulisse de manière étanche dans le cylindre 3, porte à cet effet une garniture annulaire 22. Chaque disque 21 est percé dans le sens de l'axe de la tige 11, d'un certain nombre de passages 23, décalés radialement de manière sensiblement symétrique par rapport à la tige 11.

Les deux faces internes 24 des disques 21 sont sensiblement parallèles, et séparées par un intervalle où se trouve disposée une rondelle d'obturation flexible 25, centrée sur la tige 11. En position de repos (Figure 3), la rondelle d'obturation 25 est sensiblement parallèle aux deux faces en regard 24 des disques 21, et présente une bordure périphérique montée avec un jeu radial par rapport à la paroi du cylindre 3 entourant le piston 12.

Pour un déplacement lent du piston de compensation, le jeu radial précité de la rondelle élastique 25 permet le passage du liquide 4 de part et d'autre de la rondelle 25 (Figure 3). Mais, lorsque la vitesse d'écoulement du liquide 4 à travers le piston 12 tend à dépasser une valeur correspondant à la valeur limite choisie pour la vitesse de déformation de l'amortisseur, la flexibilité de la rondelle 25 permet une flexion de celle-ci sous l'action de l'écoulement du liquide 4. La bordure périphérique de la rondelle 25 peut alors venir en appui étanche contre l'une des faces internes 24 des disques 21 (Figure 4), obturant les passages 23 correspondants. Ceci empêche l'écoulement du liquide 4 à travers le piston de compensation 12, interdisant le coulissement du piston 12 dans le cylindre 3 de l'amortisseur.

De préférence, chaque face interne 24 des disques 21A, 21B, du piston de compensation 12 présente en coupe axiale un profil courbe épousant sensiblement le profil de la rondelle 25 élastiquement déformée, en appui par sa bordure périphérique contre la face interne 21 (Figure 4).

Ainsi qu'on l'a représenté sur la Figure 1, le cylindre 3 de l'amortisseur hydraulique télescopique conforme à l'invention est, de préférence, complètement plein de liquide 4 en position de service. Pour compenser les variations du volume offert au liquide 4 dans le cylindre 3, du fait du coulissement des tiges 6 et 11, le cylindre 3 contient avantageusement un élément élastique de volume variable.

Par exemple, l'élément élastique de volume variable est constitué par un pièce 26 en caoutchouc synthétique expansé, tel que le néoprène, résistant à l'action agressive du liquide 4 contenu dans le cylindre 3. La pièce élastique 26, montée dans le cylindre 3 entre les positions limites du piston d'amortissement 5 et du piston de compensation 12, présente avantageusement une structure alvéolaire, à cellules fermées, pour éviter d'être imprégnée par le liquide 4. La pièce élastique 26 présente, par exemple, une forme annulaire, offrant un passage axial 26A dans le sens de l'axe du cylindre 3, pour l'écoulement du liquide 4 à travers la pièce 26, comme on l'expose plus loin.

On va maintenant exposer le fonctionnement et les avantages de l'amortisseur conforme à l'invention, tel qu'il vient d'être décrit, en référence aux Figures 1, 3 et 4.

On suppose le véhicule et l'amortisseur en position de repos, avec une charge moyenne du véhicule, correspondant à la distance "Do" déjà mentionée (Figure 1), entre les parties 1 et 2 du véhicule où sont fixées les extrémités des tiges 11 et 6 de l'amortisseur.

Si on modifie la charge ou le centrage du véhicule, la suspension élastique (non représentée) se déforme, par exemple dans le sens de la Flèche F1 (raccourcissement de l'amortisseur), correspondant à une augmentation de la charge locale subie par la partie de la suspension associée à l'amortisseur. Au contraire, si la charge locale précitée diminue, par suite d'un allègement ou d'une variation inverse du centrage du véhicule, la suspension se déforme dans le sens de la Flèche F2 (allongement de l'amortisseur).

Si la vitesse de déformation de l'amortisseur est lente, le piston de compensation 12 peut coulisser dans le cylindre 3. En effet (Figure 3), la rondelle flexible 25 reste sensiblement plane et autorise l'écoulement du liquide 4 d'une côté à l'autre du piston 12, à travers les passages 23 des disques 21A, 21B, dans un sens ou dans l'autre. Ainsi, le piston de compensation 12 (Figure 1) peut coulisser dans le cylindre 3, dans le sens de la Flèche F1, d'une quantité maximum C1, correspondant au raccourcissement de l'amortisseur. Le piston 12 peut aussi coulisser d'une quantité maximum C2, dans l'autre sens (Flèche F2), correspondant à un allongement de l'amortisseur.

Cependant, le ressort de rappel 14, ayant ses deux extrémités respectivement fixées à la collerette 15 du cylindre 3, et la coupelle 16 de la tige d'amortissement 6 agit dans un sens ou dans l'autre (Flèches F1, F2), pour assurer le maintien du piston d'amortissement 5, dans le cylindre 3, dans sa position prédéterminée de repos, prévue par construction, en regard de la zone de transition 5B de la paroi interne du cylindre 3. La position précitée de repos du piston d'amortissement 5 permet à celui-ci une course utile d'amortissement A1 ou A2, réservant la pleine efficacité de l'amortisseur, dans chaque sens.

Dans une position quelconque du piston de compensation 12, la suspension du véhicule peut se trouver sollicitée d'une manière plus énergique, provoquant une déformation de l'amortisseur à une vitesse supérieure à la limite choisie. En ce cas, la rondelle élastique 25 se déforme en flexion (Figure 4), sous l'action du passage du liquide 4 à travers le piston de compensation 12. Celui-ci se trouve ainsi bloqué dans le cylindre 3, obligeant le piston d'amortissement 5 à coulisser dans le cylindre 3, pour assurer l'effet d'amortissement désirée du véhicule.

Dans le sens du raccourcissment de l'amortisseur (Flèche F1), le piston d'amortissement 5 peut ainsi coulisser dans le cylindre 3 dans la limite d'une course maximum A1, par rapport à sa position de repos représentée sur la Figure 1. Dans l'autre sens (Flèche F2), correspondant à l'allongement de l'amortisseur, le piston d'amortissement 5 peut coulisser dans le cylindre 3 suivant une course maximum A2.

Par rapport à la longueur normale de montage "Do" de l'amortisseur au repos, pour une charge moyenne du véhicule, on a représenté sur la Figure 1 les valeurs extrêmes D1 et D2 de la longueur de l'amortisseur raccourci ou allongé, ainsi permises par construction. En valeur absolue, ces longueurs extrêmes correspondent aux équations suivantes:

$$D1 = Do - (C1 + A1) \qquad (1)$$
$$D2 = Do + (C2 + A2) \qquad (2)$$

Pratiquement, on choisit les valeurs C1 et C2 des courses limites prévues dans chaque sens pour le piston de compensation 12, en fonction de la flexibilité de la suspension du véhicule, et en tenant compte des variations possibles de la charge et du centrage du véhicule au repos. En général, on donne la même valeur absolue aux courses limites C1 et C2.

Egalement, les courses limites A1 et A2 prévues pour le piston d'amortissement 5 ont, en général, la même valeur absolue, sensiblement plus élevée que celle de C1 et C2, pour tenir compte des effets dynamiques importants subis en marche par la suspension du véhicule, et de l'amortissement nécessaire.

Au-delà de l'amplitude de déformation de l'amortisseur correspondant aux courses limites C1 et C2 du piston de compensation 12 (Figure 1), le piston de compensation 12 se trouve bloqué, dans le cylindre 3, par des butées de fin de course (non représentées). De même, pour une vitesse de déformation de l'amortisseur tendant à dépasser la valeur limite choisie, le piston de compensation 12 se trouve bloqué dans le cylindre 3 par l'effet de verrouillage hydraulique résultant de la flexion complète de la rondelle d'obturation 25 (Figure 4). Le blocage précité du piston de compensation 12 oblige le piston d'amortissement 5 à coulisser à la demande dans le cylindre 3.

Le ressort de rappel 14, fixé par ses extrémités à la collerette 15 et à la coupelle 16, où il est retenu par les gorges filetées 15A, 16A, peut ainsi coopérer utilement en traction ou en compression avec la suspension élastique (non représentée) du véhicule, lorsque la vitesse de déformation de l'amortisseur dépasse la valeur limite choisie. L'amortisseur conforme à l'invention présente plusieurs avantages par rapport aux amortisseurs connus.

Le coulissement du piston de compensation 12, permis à vitesse lente, suivant une course d'allongement C2 ou de raccourcissement C1, autorise une déformation lente de l'amortisseur. Le ressort de rappel 14 maintient ainsi constamment le piston d'amortissement 5 dans sa position de repos prévue par construction, en regard de la zone de transition 5B de la paroi interne du cylindre 3. Ceci assure une pleine efficacité de l'amortisseur dans l'une ou l'autre sens de fonctionnement (Flèches F1, F2).

La maintien du piston d'amortissement 5 dans sa position de repos précitée est particulièrement important dans le cas d'un amortisseur séquentiel, déjà mentionné. En effet, un tel amortisseur est prévu pour agir d'une manière dissymétrique à partir d'une position de repos déterminée du piston d'amortissement, faute de quoi l'efficacité particulière de l'amortisseur n'est plus entièrement assurée.

Dans le mode de réalisation du piston d'amortissement 12 conforme aux Figures 3 et 4, il est facile de déterminer expérimentalement les caractéristiques de la rondelle flexible 25, pour assurer avec précision l'obturation des passages 23, au moment où la vitesse d'écoulement du liquide 4 tend à dépasser la valeur limite choisie. Celle-ci correspond par exemple à un mouvement du piston de compensation 12 d'une durée de dix secondes pour une course C1 (Figure 1). On prend une rondelle 25 d'une certaine épaisseur, présentant un jeu diamétral réduit par rapport à la paroi interne du cylindre 3. Si le fonctionnement du piston 12 fait apparaître une sensibilité excessive de la rondelle 5, on augmente le jeu diamétral de la rondelle, pour atténuer l'effet de l'écoulement du fluide. On peut aussi augmenter l'épaisseur de la rondelle, pour en réduire la flexibilité.

Le profil arrondi des disques 21A, 21B, épousant celui de la rondelle 25 en flexion (Figure 4) assure une obturation précise des passages 23, évitant une usure indésirable des disques, par exemple, en métal léger, par la bordure de la rondelle en acier.

La fixation des deux extrémités du ressort de rappel hélicoïdal 14 dans les gorges filetées 15A, 16A de la collerette 15 du cylindre 3 et de la coupelle 16 de la tige d'amortissement 6 permet avantageusement au ressort 14 d'agir indifféremment en compression ou en traction. Le ressort 14 peut ainsi maintenir la position de repos du piston d'amortissement 5, pour compenser une déformation lente de l'amortisseur. Le ressort 14 peut aussi coopérer utilement avec la suspension élastique du véhicule, lorsque la vitesse de déformation de l'amortisseur dépasse la valeur limite choisie.

Exemple numérique

On a étudié une réalisation industrielle de l'invention conforme à ce qui vient d'être dit à propos des Figures 1, 3 et 4, pour un amortisseur du type séquentiel déjà mentionné.

L'amortisseur comporte un piston d'amortissement 5, muni d'un clapet à étranglement variable, déjà mentionné.

La valeur moyenne "Do" de la longueur de montage de l'amortisseur au repos (Figure 1) est de 475 mm. La course possible du piston d'amortissement 5 dans chaque sens (A1 ou A2) est de 75 mm, et la course du piston de compensation 12 dans chaque sens (C1 ou C2) de 25 mm. Ainsi, la longueur minimale D1 de l'amortisseur est de 375 mm, et sa longueur maximale D2, de 575 mm. Les deux pistons 5, 12, ont un calibre de 35 mm, correspondant à une automobile de taille moyenne. La tige d'amortissement 6, et la tige de compensation 11 ont un calibre de 12 mm.

Chaque disque 21A, 21B, du piston d'amortissement 12 mesure environ 8 mm d'épaisseur dans sa partie centrale montée sur la tige 11, et environ 6,5 mm d'épaisseur sur sa bordure amincie, correspondant au profil courbe prévu pour épouser le profil de la rondelle 25 fléchie (Figure 4). La rondelle 25 en acier à haute résistance mesure 0,5 mm d'épaisseur et présente un diamètre de 30 mm environ. Chaque disque 21 est percé de huit trous cylindriques 23, de 2,5 mm de calibre, régulièrement répartis autour de la tige 11. Pour obturer les trous 23 (Figure 4), la déflexion de la bordure de la rondelle 25 est de l'ordre de 0,7 mm dans chaque sens, à partir de sa position de repos (Figure 3).

Pour régler la sensibilité de la rondelle d'obturation 25, on peut ajuster à la demande son jeu radial par rapport à la paroi interne du cylindre 3, comme on l'a déjà indiqué, en mesurant le temps de parcours de la tige de compensation 11 (Figure 1), par rapport à une durée prédéterminée, de dix secondes par exemple, pour une course C1. En appliquant des charges progressivement croissantes à la tige 11, on cherche à provoquer la flexion complète de la rondelle d'obturation 25 (Figure 4) et le blocage du piston de compensation 12, pour une charge de la tige 11 correspondant à la durée limite précitée.

Sur la Figure 2, analogue à la Figure 1, on a représenté une variante de l'amortisseur representé sur la Figure 1, dont le montage sensiblement vertical est inversé par rapport à celui qui vient d'être décrit.

La tige de compensation 11 est fixée à la partie non suspendue 2 de la structure du véhicule, et l'extrémité 3A du cylindre, associée au piston de compensation 12, se trouve en bas de l'amortisseur dans ce mode de montage.

On peut ainsi réserver un volume gazeux 31 dans le cylindre 3 de l'amortisseur, au-dessus du niveau supérieur 31A du liquide 4, du côté de l'extrémité supérieure 3B du cylindre. Cette disposition permet de supprimer la pièce élastique interne 26 de la Figure 1, le volume gazeux 31 assurant la compensation des variations de volume interne qui résultent du coulissement des tiges 6 et 11.

En outre, le mode de montage inversé de la Figure 2 permet de disposer le ressort de rappel 14 également à la partie supérieure de l'amortisseur, où il est plus facile de le protéger contre les salissures et contre l'effet des intempéries.

Bien entendu, l'invention n'est pas limitée au mode de réalisation que l'on vient de décrire en se référant aux Figures 1, 3 et 4, ni à la variante représentée sur la Figure 2.

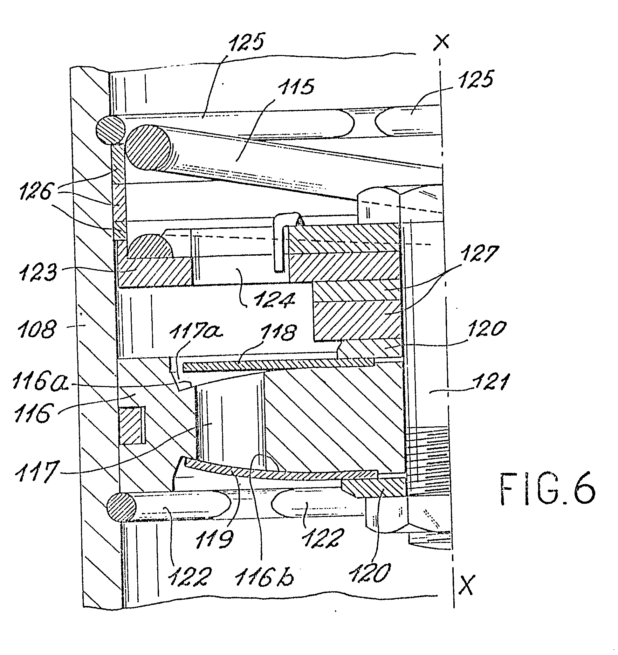

Ainsi, on a représenté sur les Figures 5 à 10 un amortisseur destiné à équiper une suspension type Mac Pherson incorporant les enseignements de la présente invention.

Dans la réalisation de la Figure 5, l'amortisseur comprend un corps tubulaire 100 dont la partie inférieure 102 est fixée à un flasque 103 (représenté partiellement) faisant partie d'une fusée (non représentée) destinée à recevoir une roue. La partie supérieure 104 du corps 100 est destinée à prendre appui contre un ressort hélicoïdal de suspension (non représenté). Cette partie supérieure 104 est traversée par une tige d'amortissement 105 destinée à être fixée à une partie suspendue d'un véhicule. Cette tige 105 est rendue solidaire d'un piston d'amortissement 106 monté à coulisse dans un cylindre 108, lui-même monté à coulisse dans une chemise 107 coaxiale au corps 100 mais de moindre diamètre que ce dernier.

Le cylindre coulissant 108 est pourvu de passages longitudinaux 109 pour supprimer l'effet d'étranglement du piston d'amortissement 106 sur une partie de la course possible de ce piston par rapport à ce cylindre 108.

D'autre part, le cylindre coulissant 108 présente, dans sa partie comprise entre le piston 106 et son extrémité 108a opposée à la tige 105, un passage 110 en regard d'une ouverture 111 de la chemise 107, pour mettre en communication le volume interne du cylindre 108 et le volume annulaire 112, comprise entre le chemise 107 et la paroi interne du corps tubulaire 100. Ce volume annulaire 112 constitue, pour le liquide d'amortissement 113, une chambre d'expansion permettant de compenser le volume de la tige 105 lors de sa rentrée dans le corps 100.

Par ailleurs, l'amortisseur comprend deux ressorts de rappel 114, 115 antagonistes disposés, l'un (114) entre le piston 106 et l'extrémité supérieure 108b du cylindre 108, et l'autre (115) entre le piston d'amortissement 106 et un piston de compensation ou cloison d'arrêt 116, disposée entre la paroi inférieure 108a du cylindre 108 et le passage 110 ménagé dans ce dernier. Comme on le verra plus en détail dans la description du fonctionnement de ce second mode de réalisation de l'invention, les ressorts antagonistes 114, 115 tendent à maintenir au repos le piston 106 en regard de l'extrémité inférieure 109a des passages 109 du cylindre 108.

La cloison d'arrêt 116, montée transversalement dans le cylindre 108, est constituée par un disque comportant (voir Figure 6) au moins un passage 117 décalé par rapport à l'axe X—X de ce disque. Deux rondelles d'obturation flexibles 118, 119 sont fixées perpendiculairement à l'axe du disque 116 au moyen de rondelles 120 et d'une vis 121 traversant le disque 116. Au repos, ces deux rondelles 118, 119 sont sensiblement parallèles au disque (cas de la rondelle 118 sur la Figure 6), et un jeu 117a est compris entre la périphérie de la rondelle 118 et le passage 117 pour permettre l'écoulement du liquide par ce passage lors d'un déplacement lent de ce liquide.

Par ailleurs, la flexibilité des rondelles 118, 119 est suffisante pour permettre la flexion de celles-ci sous l'action de l'écoulement du liquide, pour amener l'une ou l'autre de ces rondelles 118, 119 en appui étanche contre la face correspondante 116a ou 116b du disque 116, pour obturer le passage 117 (cas de la rondelle 119 sur la Figure 6).

On voit en outre, sur la Figure 6, que chaque face opposée 116a ou 116b du disque 116 comprend, en coupe axiale, un profil courbe épousant le profil de la rondelle élastiquement déformée (cas de la rondelle 119) en appui contre la face correspondante 116b.

Dans l'exemple de la Figure 6, le disque 116 est immobilisé à sa partie inférieure par rapport au cylindre 108, au moyen d'un jonc circulaire 122 ancré dans une gorge de la paroi de ce cylindre 108. En outre, le ressort 115 prend appui sur un embout 123 qui est rendu solidaire du disque 116 par la vis 121. Cet embout 123 comporte un passage 124 pour le liquide d'amortissement. D'autre part, cet embout 123 est immobilisé vers le haut par un jonc circulaire 125 analogue au jonc 122. La position de l'embout 123 est de plus réglable par des cales 126 et 127.

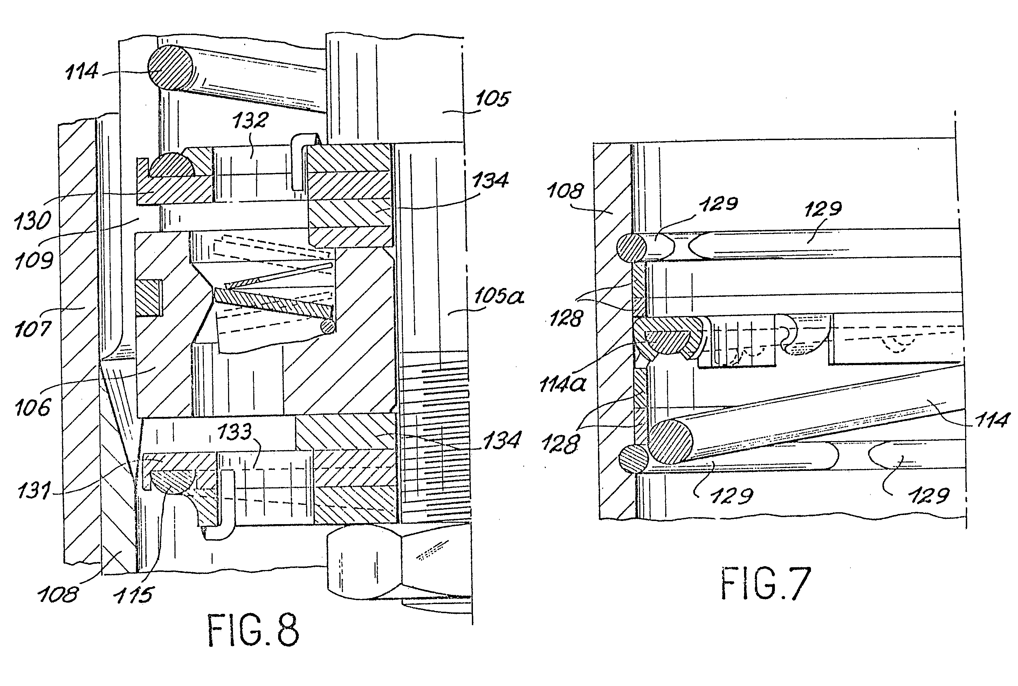

L'extrémité supérieure 114a du ressort 114 (voir Figure 7) est immobilisé par rapport au cylindre 108 par des cales de positionnement 128 comprises entre deux joncs circulaires 129 ancrés dans la paroi du cylindre 108.

Sur la Figure 8, on voit d'autre part que les ressorts 114 et 115 sont rendus solidaires du piston 106 par des embouts 130, 131 démontables en deux pièces coaxiales, centrés sur l'extrémité 105a de la tige 105. Les embouts 130, 131 comportent des passages 132, 133 pour le liquide d'amortissement. De plus, les embouts 130, 131 sont espacés du piston 106 par des rondelles 134.

Le fonctionnement de l'amortisseur que l'on vient de décrire en se référant aux Figures 5 à 10 est le suivant:

En charge normale du véhicule, le piston 106 et le cylindre 108 occupent la position représentée sur la Figure 5. Les variations de charge du véhicule entraînent des variations de l'assiette de ce dernier qui engendrent des déplacements du piston 106 par rapport au corps tubulaire 100. En cas de vitesse de déplacement lente de ce piston 106, l'action antagoniste des ressorts 114, 115 tend à déplacer le cylindre 108 à l'intérieur de la chemise 107, de telle sorte que le piston 106 se retrouve dans la position indiquée sur la Figure 5, au voisinage de l'extrémité inférieure des passages 109.

Le déplacement du cylindre 108 s'effectue de manière lente grâce au freinage du liquide d'amortissement à travers les passages 117a de la cloison 116, les rondelles flexibles 118, 119 restant écartées des passages 117.

Lors des parcours routiers du véhicule, le piston 106 est animé par rapport à la chemise 107 de mouvements rapides qui entraînent des mouvements rapides du liquide d'amortissement. Ces vitesses d'écoulement rapides de ce liquide entraînent des pressions telles que les rondelles flexibles 118, 119 sont appliquées, suivant la direction du déplacement du piston 106, sur les faces 116a ou 116b en fermant ainsi le passage 117 du disque 116. Ceci a pour effet d'empêcher tout déplacement du cylindre 108 à l'intérieur de la chemise 107. Le piston 106 coulisse alors normalement dans le cylindre 108, de sorte que la position des passage 109 par rapport à la chemise 107 est maintenue (tant que la charge du véhicule ne subit pas de nouvelle modification) dans la position la plus favorable par rapport au piston 106 pour le fonctionnement en amortisseur séquentiel déjà mentionné.

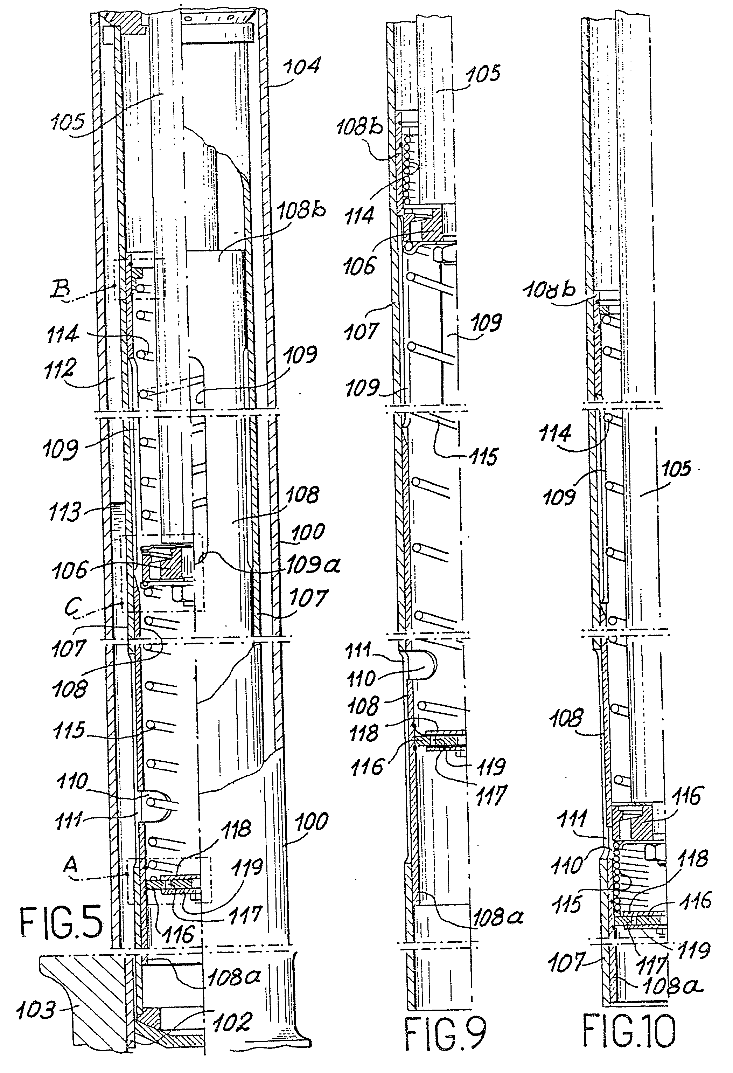

Sur les Figures 9 et 10, le piston 106 est représenté dans les deux positions extrêmes de sa course. Sur la Figure 9, le piston 106 ainsi que le cylindre 108, sont en position haute maximale. Sur la Figure 10, le piston 106 ainsi que le cylindre 108, sont en position basse maximale.

Bien entendu, l'invention n'est pas limitée aux modes de réalisation que l'on vient de décrire et l'on peut y apporter diverses modifications sans sortir du cadre de l'invention.

Ainsi, dans le second mode de réalisation, les moyens de blocage du coulissement du cylindre 108 par rapport à la chemise 107, constituées dans l'exemple décrit par les rondelles flexibles 118, 119 coopérant avec les passages 117 du disque 116 peuvent être remplacés par tout autre dispositif à clapet sensible à la vitesse d'écoulement du liquide amortisseur. De même les cales 126 de la Figure 6 peuvent être remplacées par plusieurs gorges destinées à recevoir le jonc 125. Les cales 128 de la Figure 7 peuvent également être remplacées par un certain nombre de gorges pouvant recevoir les joncs 129.

## Revendications

1. Amortisseur pour un véhicule à suspension élastique, comportant deux éléments (3, 5) associées l'un à l'autre d'une manière déformable dans le sens de la déformation de la suspension du véhicule, les deux éléments de l'amortisseur étant prévus pour être reliés respectivement à une partie suspendue (1) et à une partie non suspendue (2) du véhicule et comprenant un piston d'amortissement (5) monté à coulisse dans un cylindre (3) contenant un liquide (4), le piston d'amortissement étant solidaire d'une tige coulissante (6) traversant une extrémité du cylindre (3) et étant susceptible d'être assujettie à l'une (2) desdites parties du véhicule, cet amortisseur étant caractérisé en ce qu'il comprend un piston de compensation (12) relié à l'autre partie (1) du véhicule par une tige (11) traversant l'autre extrémité du cylindre (3), le piston de compensation comportant au moins un disque (21) perpendiculaire à l'axe de la tige (11) du piston de compensation qui coopère de façon coulissante avec le cylindre (3), le disque étant percé dans le sens de l'axe précité par au moins un passage (23) décalé radialement par rapport à la tige (11), au moins une rondelle d'obturation flexible (25) centrée sur l'axe de la tige (11) et sensiblement parallèle au disque (21) présentant une bordure périphérique montée avec un jeu radial par rapport à la paroi cylindrique, ce jeu radial permettant l'écoulement du liquide par le passage (23) lorsque la vitesse de déplacement relative entre lesdites parties (1, 2) du véhicule est inférieure à une vitesse limite prédéterminée, de façon à permettre le coulissement du piston de compensation (12) dans le cylindre (3) et à empêcher la déformation relative des deux éléments (3, 5) de l'amortisseur, la rondelle (25) étant susceptible de fléchir pour venir en appui étanche contre l'une des faces du disque (21) pour obturer le passage (23) lorsque ladite vitesse de déplacement relative est supérieure à la vitesse limite prédéterminée, de façon à empêcher le coulissement du piston de compensation (12) dans le cylindre (3) et à permettre le déformation relative des deux éléments (3, 5) de l'amortisseur, des moyens de rappel (14) assurant au repos le maintien des deux éléments de l'amortisseur dans une position relative prédéterminée.

2. Amortisseur selon la revendication 1, caractérisé en ce que les moyens de rappel sont prévus pour maintenir au repos le piston d'amortissement (5) dans une position prédéterminée à l'intérieur du cylindre (3), et comportent au moins un ressort (14) interposé entre le piston d'amortissement et le cylindre.

3. Amortisseur selon la revendication 2, caractérisé en ce que le ressort de rappel (14) du piston d'amortissement (5) est un ressort hélicoïdal entourant le cylindre (3), le ressort précité ayant une extrémité en appui sur une collerette (15) entourant le cylindre et l'autre extrémité en appui sur une coupelle (16) solidaire de la tige (6) du piston d'amortissement, et centrée sur cette tige.

4. Amortisseur selon la revendication 3, caractérisé en ce que la collerette (15) entourant le cylindre et la coupelle (16) solidaire de ladite tige d'amortissement comportent chacune une bordure profilée (15A, 16A) formant une gorge pour retenir une extrémité du ressort hélicoïdal de rappel (14) engagée dans chacune des gorges profilées, permettant au ressort d'agir en traction et en compression entre la coupelle et la collerette précitées.

5. Amortisseur selon l'une quelconque des revendications 3 ou 4, caractérisé en ce qu'il comporte un fourreau de protection (17) de la tige (6) du piston d'amortissement, le fourreau précité étant sensiblement cylindrique, coaxial à la tige et fixé à celle-ci à l'intérieur du ressort de rappel hélicoïdal (14) par une extrémité fermée du fourreau appliquée contre la coupelle d'appui (16) du ressort, le fourreau de protection présentant une embouchure (17A) qui recouvre l'extrémité adjacente du cylindre (3) et peut coulisser extérieurement sur ce dernier en suivant le coulissement de la tige du piston d'amortissement.

6. Amortisseur selon l'une quelconque des revendications précédentes, caractérisé en ce que le piston de compensation comporte deux disques (21A, 21B) de même diamètre et percés chacun dans le sens de l'axe de la tige (11) par au moins un passage (23), les deux faces internes en regard (24) des disques étant sensiblement parallèles et séparées par un intervalle dans lequel est disposé la rondelle d'obturation flexible (25), cette dernière étant susceptible de fléchir pour venir en appui étanche contre l'une ou l'autre des faces internes des disques, selon le sens du déplacement relatif entre les parties (1, 2) du véhicule.

7. Amortisseur selon la revendication 6, caractérisé en ce que chaque face interne (24) des deux disques (21A, 21B) du piston de compensation présente, en coupe axiale, un profil courbe épousant sensiblement le profil de la rondelle (25) élastiquement déformée en appui par sa bordure contre la face interne précitée.

8. Amortisseur pour un véhicule à suspension élastique, comportant deux éléments (106, 108) associés l'un à l'autre d'une manière déformable dans le sens de la déformation de la suspension du véhicule, les deux éléments de l'amortisseur étant prévus pour être reliés respectivement à une partie suspendue et à une partie non suspendue du véhicule et comprenant un piston d'amortissement (106) monté à coulisse dans un cylindre (108) contenant un liquide (113), le piston d'amortissement étant solidaire d'une tige coulissante (105) traversant une extrémité du cylindre et susceptible d'être assujettie à l'une desdites parties du véhicule, cet amortisseur étant caractérisé en ce que cylindre (108) est monté à coulisse à la fois autour du piston d'amortissement (106) et à l'intérieur d'une chemise (107) assujettie à l'autre partie du véhicule, ledit cylindre étant pourvu d'au moins un passage longitudinal (109) et présentant, dans sa partie comprise entre le piston d'amortissement (106) et son extrémité opposée à la tige (105) de ce dernier, au moins un passage (110) en regard d'une ouverture (111) formée dans la chemise, l'amortisseur comprenant de plus une cloison transversale (116) solidaire du cylindre (108), cette cloison comprenant au moins un disque percé d'au moins un passage (117) décalé par rapport à l'axe du disque, au moins une rondelle d'obturation flexible (118, 119) centrée sur l'axe du disque et sensiblement parallèle au disque (116) présentant une bordure périphérique montée avec un jeu radial par rapport à la paroi du cylindre (108), ce jeu radial permettant l'écoulement du liquide par le passage (117) lorsque la vitesse de déplacement relative entre lesdites parties du véhicule est inférieure à une vitesse limite prédéterminée, de façon à permettre le coulissement du cylindre (108) et de la cloison (116) à l'intérieur de la chemise (107) et à empêcher la déformation relative des deux éléments (106, 108) de l'amortisseur, la rondelle (118, 119) étant susceptible de fléchir pour venir en appui étanche contre l'une des faces du disque (116) pour obturer le passage (117) lorsque ladite vitesse de déplacement relative est supérieure à la vitesse limite prédéterminée, de façon à empêcher le coulissement du cylindre (108) et de la cloison (116) à l'intérieur de la chemise (107) et à permettre la déformation relative des deux éléments (106, 108) de l'amortisseur, des moyens de rappel (114, 115) assurant au repos le maintien des deux éléments de l'amortisseur dans une position relative prédéterminée.

9. Amortisseur selon la revendication 8, caractérisé en ce qu'il comporte deux ressorts de rappel (114, 115) antagonistes disposés, l'un (114) entre une face du piston d'amortissement (106) et une extrémité (108b) du cylindre (108), et l'autre (115) entre l'autre face du piston d'amortissement (106) et l'autre extrémité du cylindre (108), pour maintenir au repos le piston d'amortissement et le cylindre dans ladite position déterminée, dans laquelle le piston d'amortissement (106) est disposé au voisinage d'une extrémité (109a) du passage longitudinal (109) formé dans le cylindre.

10. Amortisseur selon l'une quelconque des revendications 8 ou 9, caractérisé en ce que ladite cloison transversale (116) est disposée entre le passage (110) formé dans le cylindre et l'extrémité (108a) de ce dernier opposée à la tige (105) du piston d'amortissement, le passage (117) formé dans le disque (116) mettant en communication le volume interne du cylindre (108) au voisinage du piston d'amortissement (106) et une extrémité fermée de la chemise (107) lorsque la rondelle d'obturation (118, 119) n'obture pas le passage (117).

11. Amortisseur selon l'une quelconque des revendications 8 à 10, caractérisé en ce que la cloison transversale comprend un disque (116) et deux rondelles d'obturation flexibles (118, 119) sensiblement centrées sur l'axe du disque et disposées de part et d'autre de ce dernier, l'une ou l'autre des rondelles étant susceptible de fléchir pour venir en appui étanche contre la face correspondante (116a, 116b) du disque, selon le sens du déplacement relatif entre

21   **0 003 458**   22

lesdites parties du véhicule.

12. Amortisseur selon la revendication 11, caractérisé en ce que chaque face opposée (116a, 116b) du disque présente, en coupe axiale, un profil courbe épousant le profil de la rondelle élastiquement déformée (118, 119) en appui contre la face précitée.

## Claims

1. Shock absorber for a vehicle having a spring suspension, comprising two elements (3, 5) associated in a manner that is deformable in the direction of deformation of the vehicle suspension, the two elements of the shock absorber having means for connection respectively to the suspended part (1) and a non-suspended part (2) of a vehicle and comprising a shock-absorber piston (5) slidably mounted in a cylinder (3) containing a liquid (4), the shock absorber piston being joined to a slide rod (6) passing through one end of the cylinder (3) and being adapted to be fastened to the said non-suspended vehicle part (2), said shock absorber being characterized in that it comprises a compensation piston (12) linked to the other vehicle part (1) by a rod (11) passing through the other end of cylinder (3), the compensation piston comprising at least one disc (21) perpendicular to the axis of rod (11) of the compensation piston which slides in cylinder (3), the disc being pierced in the direction of the said axis by at least one passage (23) radially offset with respect to the rod (11), at least one flexible sealing washer (25) centred on the axis of rod (11) and substantially parallel to the disc (21) and its rim providing a radial clearance from the cylinder wall, said radial clearance allowing liquid flow through passage (23) when the relative rate of displacement between the said vehicle parts (1, 2) is less than a predetermined limiting rate, whereby to allow the compensation piston (12) to slide in cylinder (3) and impede relative displacement of the two elements (3, 5) of the shock absorber, the washer (25) being adapted to flex into close contact with one face of disc (21) to seal passage (23) when the said relative rate of displacement exceeds the predetermined limiting rate, whereby to impede sliding of the compensation piston (12) in cylinder (3) and permit relative displacement of the two elements (3, 5) of the shock absorber, and return means (14) ensuring that, when at rest, the two elements of the shock absorber are maintained in a predetermined relative position.

2. Shock absorber according to Claim 1 characterized in that the return means are provided to maintain the shock absorber piston (5), when at rest, in a predetermined position in the interior of cylinder (3), and comprise at least one spring (14) interposed between the shock absorber piston and the cylinder.

3. Shock absorber according to Claim 2 characterized in that the return spring (14) of the shock absorber piston (5) is a helical spring around cylinder (3), the said spring having one end bearing on an annular collar (15) around the cylinder, and the other end bearing on a dish (16) fixedly centred on rod (6) of the shock absorber piston.

4. Shock absorber according to Claim 3 characterized in that the collar (15) around the cylinder and the dish fixed on the said shock absorber piston rod, each has a profiled rim (15A, 16A) forming a groove, to retain one end of the helical return spring (14) engaged in each of the profiled grooves, permitting the spring to act in traction and in compression between the said collar and dish.

5. Shock absorber according to either of Claims 3 and 4, characterized in that it comprises a protecting sleeve (17) for the shock absorber piston rod (6), the said sleeve being substantially cylindrical, coaxial with the rod and fixed to it internally within the helical return spring (14) by a closed end of the sleeve applied against the bearing dish (16) of the spring, the protecting sleeve having an open end (17A) covering the adjacent end of cylinder (3) and able to slide externally of the latter with the sliding of the shock absorber piston rod.

6. Shock absorber according to any of the preceding Claims characterized in that the compensation piston comprises two discs (21A, 21B) having the same diameter and each being pierced in the direction of the axis of rod (11) by at least one passage (23), the two facing internal faces of the discs being substantially parallel and being separated by a gap containing the flexible sealing washer (25), the latter being flexible to come into contact with either of the internal faces of the discs, depending on the direction of relative displacement between the vehicle parts (1, 2).

7. Shock absorber according to Claim 6 characterized in that each internal face (24) of the two discs (21A, 21B) of the compensation piston has in cross section a curved profile corresponding substantially to the profile of the washer (25) when elastically deformed so that its rim contacts the aforementioned internal face.

8. Shock absorber for a vehicle having a spring suspension, comprising two elements (106, 108) associated in a manner that is deformable in the direction of deformation of the vehicle suspension, the two elements of the shock absorber having means for connection respectively to a suspended and a non-suspended part of the vehicle, and comprising a shock absorber piston (106) slidably mounted in a cylinder (108) containing a liquid (113), the shock absorber piston being fixed to a slide rod (105) passing through one end of the cylinder and adapted to be fastened to one of said vehicle parts, said shock absorber being characterized in that the cylinder (108) is slidably mounted both around shock absorber piston (106) and within jacket (107) connectable to the other part of the vehicle, said cylinder having at least one longitudinal passage (109) and having in its part located between the shock absorber piston (106) and its end opposed to the latter's slide rod (105), at least one passage (110) facing an opening (111) formed in the jacket, the shock absorber also comprising a transverse partition (116) fixed to cylinder (108), said partition comprising at least one disc pierced by at least one passage (117) offset with respect to the axis of the disc, at least one flexible sealing washer (118, 119) centred on the axis of the disc and substantially parallel to the disc (116) having a rim providing a radial clearance from the cylinder wall, said radial clearance permitting flow of liquid through passage (117) when the relative rate of displacement between the said vehicle parts is less than a predetermined limiting rate, whereby to allow sliding of cylinder (108) and the partition (116) within the jacket (107) and to impede relative displacement of the two elements (106, 108) of the shock absorber, the washer (118, 119) being adapted to flex into close contact with one of the faces of disc (116) to seal the passage (117) when the said relative rate of displacement exceeds the predetermined limiting rate, whereby to impede sliding of cylinder (108) and partition (116) inside jacket (107) and to permit relative displacement of the two elements (106, 108) of the shock absorber, and return means (114, 115) ensuring that, when at rest, the two elements of the shock absorber are maintained in a predetermined relative position.

9. Shock absorber according to Claim 8 characterized in that it comprises two return springs (114, 115) disposed in opposition, one between one face of the shock absorber piston (106) and an end (108b) of cylinder (108) and the other between the other face of the shock absorber piston (106) and the other end of the cylinder (108), to maintain, when at rest, the shock absorber piston and the cylinder in the said predetermined position, in which the shock absorber piston (106) is located near an end (109a) of the longitudinal passage (109) formed in the cylinder.

10. Shock absorber according to either of Claims 8 and 9 characterized in that the said transverse partition (116) is disposed between the passage (110) formed in the cylinder and the cylinder end (108a) opposite the rod (105) of the shock absorber piston, the passage (117) formed in disc (116) providing communication between the internal volume of cylinder (108) around the shock absorber piston and a closed end of the jacket (107) when the sealing washer (118, 119) does not seal the passage (117).

11. Shock absorber according to any of Claims 8 to 10 characterized in that the transverse partition comprises a disc (116) and two flexible sealing washers (118, 119) substantially centred on the axis of the disc and disposed one on each side of the disc, each disc being adapted to flex into close contact with a corresponding face (116a, 116b) of the disc according to the direction of relative displacement of the said vehicle parts.

12. Shock absorber according to Claim 11 characterized in that each opposed face (116a, 116b) of the disc, presents in cross section a curved profile corresponding substantially to the profile of the washer (118, 119) when elastically deformed into contact with the aforementioned face.

**Patentansprüche**

1. Stoßdämpfer für ein Fahrzeug mit elastischer Aufhängung, mit zwei relativ zueinander in Richtung der Verformung der Aufhängung des Fahrzeugs bewegbaren, mit einem gefederten Teil (1) bzw. einem ungefederten Teil (2) des Fahrzeugs verbindbaren Elementen (3, 5) in Form eines eine Flüssigkeit (4) enthaltenden Zylinders (3) und eines darin verschieblichen Dämpfungskolbens (5), welcher fest mit einer ein Ende des Zylinders (3) durchsetzenden und an einem (2) der Teile des Fahrzeugs befestigbaren Kolbenstange (6) verbunden ist, dadurch gekennzeichnet, daß der Stoßdämpfer einen über eine das andere Ende des Zylinders (3) durchsetzende Kolbenstange (11) mit dem anderen Teil (1) des Fahrzeugs verbundenen Ausgleichskolben (12) mit wenigstens einer lotrecht zur Achse der Kolbenstange (11) des Ausgleichskolbens angeordneten und verschieblich im Zylinder (3) geführten, radial versetzt zur Kolbenstange (11) von wenigstens einem in Richtung das Achse derselben verlaufenden Durchlaß (23) durchsetzten Scheibe (21) sowie mit wenigstens einer konzentrisch mit der Kolbenstange (11) im wesentlichen parallel zu der Scheibe (21) angeordneten, flexiblen Abdeckscheibe (25) aufweist, bei welchem zwischen den Umfangsrand der Abdeckscheibe und der Zylinderwandung ein radialer Zwischenraum vorhanden ist, welcher den Durchtritt der Flüssigkeit durch den Durchlaß (23) und damit eine Verschiebung des Ausgleichskolbens (12) im Zylinder gestattet und dadurch eine Bewegung der beiden Elemente (3, 5) des Stoßdämpfers relativ zueinander verhindert, solange die Geschwindigkeit einer Bewegung der Teile (1, 2) des Fahrzeugs relativ zueinander unterhalb einer vorbestimmten Grenzgeschwindigkeit liegt, wobei die Abdeckscheibe (25) bei Überschreitung der vorbestimmten Grenzgeschwindigkeit der Relativbewegung durch Verformung in abdichtende Anlage an einer Seite der Scheibe (21) bringbar ist, um deren Durchlaß (23) zu sperren, so daß der Ausgleichskolben (12) an einer Verschiebung im Zylinder (3) gehindert ist und die beiden Elemente (3, 5) des Stoßdämpfers relativ zueinander bewegbar sind, und wobei ferner die beiden Elemente des Stoßdämpfers durch eine Rückstelleinrichtung (14) in einer vorbestimmten Ruhestellung relativ zu-

einander gehalten sind.

2. Stoßdämpfer nach Anspruch 1, dadurch gekennzeichnet, daß die Rückstelleinrichtung den Dämpfungskolben (5) in einer vorbestimmten Ruhestellung innerhalb des Zylinders (3) hält und wenigstens eine zwischen dem Dämpfungskolben und dem Zylinder angeordnete Feder (14) aufweist.

3. Stoßdämpfer nach Anspruch 2, dadurch gekennzeichnet, daß die Rückstellfeder (14) des Dämpfungskolbens (5) eine den Zylinder (3) umgebende Schraubenfeder ist, welche sich mit einem Ende an einem den Zylinder umgebenden Sitzring (15) und mit dem anderen Ende an einer konzentrisch mit der Kolbenstange (6) des Dämpfungskolbens an dieser befestigten Sitzscheibe (16) abstützt.

4. Stoßdämpfer nach Anspruch 3, dadurch gekennzeichnet, daß der den Zylinder umgebende Sitzring (15) und die an der Kolbenstange des Dämpfungskolbens befestigte Sitzscheibe (16) jeweils einen Profilrand (15A, 16A) aufweisen, welcher eine Hohlkehle zum Festhalten des jeweiligen Endes der Rückstell-Schraubenfeder (14) darstellt, so daß die Feder zwischen der Sitzscheibe und dem Sitzring auf Zug und Druck wirksam ist.

5. Stoßdämpfer nach Anspruch 3 und/oder 4, dadurch gekennzeichnet, daß er einen im wesentlichen zylindrischen Schutzmantel (17) für die Kolbenstange (6) des Dämpfungskolbens aufweist, welcher innerhalb der Rückstell-Schraubenfeder (14) mit einem an der Sitzscheibe (16) der Feder anliegenden, geschlossenen Ende koaxial mit der Kolbenstange an dieser befestigt ist und ein offenes Ende (17A) hat, welches das zugewandte Ende des Zylinders (3) umhüllt und entsprechend der Verschiebung der Kolbenstange des Dämpfungskolbens auf der Außenseite des Zylinders verschieblich ist.

6. Stoßdämpfer nach wenigstens einem der vorstehenden Ansprüche, dadurch gekennzeichnet, daß der Ausgleichskolben zwei den gleichen Durchmesser aufweisende und von jeweils wenigstens einem in Richtung der Achse der Kolbenstange verlaufenden Durchlaß (23) durchsetzte Scheiben (21A, 21B) aufweist, deren einander zugewandte Stirnflächen (24) im wesentlichen parallel zueinander verlaufen und durch einen Zwischenraum voneinander getrennt sind, in welchem die flexible Abdeckscheibe (25) angeordnet ist, so daß diese je nach der Richtung der Relativbewegung zwischen den Teilen (1, 2) des Fahrzeugs durch Verformung in abdichtende Anlage an der inneren Stirnfläche der einen oder der anderen Scheibe bringbar ist.

7. Stoßdämpfer nach Anspruch 6, dadurch gekennzeichnet, daß die inneren Stirnflächen (24) der beiden Scheiben (21A, 21B) des Ausgleichskolbens im axialen Schnitt jeweils ein gekrümmtes Profil haben, welches im wesentlichen dem Profil der elastisch verformten und sich mit ihrem Rand in Anlage an der jeweiligen inneren Stirnfläche befindenden Abdeckscheibe (25) entspricht.

8. Stoßdämpfer für ein Fahrzeug mit elastischer Aufhängung, mit zwei relativ zueinander in Richtung der Verformung der Aufhängung des Fahrzeugs bewegbaren, mit einem gefederten Teil bzw. einem ungefederten Teil des Fahrzeugs verbindbaren Elementen in Form eines eine Flüssigkeit (113) enthaltenden Zylinders (108) und eines darin verschieblichen Dämpfungskolbens (106), welcher fest mit einer ein Ende des Zylinders durchsetzenden und an einem der Teile des Fahrzeugs befestigbaren Kolbenstange (105) verbunden ist, dadurch gekennzeichnet, daß der Zylinder auf der Umfangsfläche des Dämpfungskolbens )106) und gleichzeitig im Inneren einer am anderen Teil des Fahrzeugs befestigten Buchse (107) verschieblich geführt ist und wenigstens einen Längsdurchlaß (109) sowie im Bereich zwischen dem Dämpfungskolben (106) und seinem der Kolbenstange (105) des Letzteren gegenüberliegenden Ende wenigstens einen einer Öffnung (111) in der Buchse gegenüberstehenden Durchlaß (110) hat, daß der Stoßdämpfer ferner eine fest mit dem Zylinder (108) verbundene Querwand (116) in Form wenigstens einer versetzt zu ihrer Achse von wenigstens einem Durchlaß (117) durchsetzten Scheibe aufweist und daß konzentrisch mit der Achse der Scheibe (116) und im wesentlichen parallel zu dieser wenigstens eine flexible Abdeckscheibe (118, 119) angeordnet ist, zwischen deren äußerem Umfang und der Wandung des Zylinders ein radialer Zwischenraum vorhanden ist, welcher den Durchtritt der Flüssigkeit durch den Durchlaß (117) und damit eine Verschiebung des Zylinders (108) und der Querwand (116) im Inneren der Buchse (107) gestattet und damit eine Bewegung der beiden Elemente (106, 108) des Stoßdämpfers relativ zueinander verhindert, solange die Geschwindigkeit einer Bewegung der Teile des Fahrzeugs relativ zueinander unterhalb einer vorbestimmten Grenzgeschwindigkeit liegt, wobei die Abdeckscheibe (118, 119) bei Überschreitung der vorbestimmten Grenzgeschwindigkeit der Relativbewegung durch Verformung in abdichtende Anlage an einer Seite der Scheibe (116) bringbar ist, um deren Durchlaß (117) zu sperren, so daß der Zylinder (108) und die Querwand (116) an einer Verschiebung im Inneren der Buchse (107) gehindert sind und die beiden Elemente (106, 108) des Stoßdämpfers relativ zueinander bewegbar sind, und wobei ferner die beiden Elemente des Stoßdämpfers durch eine Rückstelleinrichtung in eine vorbestimmte Ruhestellung relativ zueinander belastet sind.

9. Stoßdämpfer nach Anspruch 8, dadurch gekennzeichnet, daß er zwei einander entgegengesetzt wirksame Rückstellfedern (114, 115) aufweist, von denen eine (114) zwischen einer Stirnseite des Dämpfungskolbens (106) und einem Ende (108b) des Zylinders (108) und die andere zwischen der anderen Stirnseite des Dämpfungskolbens (106) und dem anderen Ende des Zylinders (108) angeordnet ist, um den Dämpfungskolben und den Zylinder in der vorbestimmten Ruhestellung zu halten, in welcher der Dämpfungskolben (106) nahe einem Ende (109a) des Längsdurchlasses (109) des Zylinders liegt.

10. Stoßdämpfer nach Anspruch 8 und/oder 9, dadurch gekennzeichnet, daß die Querwand (116) zwischen dem im Zylinder geformten Durchlaß (110) und dem der Kolbenstange (105) des Dämpfungskolbens entgegengesetzten Ende (108a) des Zylinders angeordnet ist und daß der in der Scheibe (116) geformte Durchlaß (117) eine Strömungsverbindung zwischen dem an den Dämpfungskolben (106) angrenzenden Bereich des Innenraums des Zylinders (108) und einem geschlossenen Ende der Buchse (107) herstellt, solange er nicht durch die Abdeckscheibe (118, 119) verschlossen ist.

11. Stoßdämpfer nach wenigstens einem der Ansprüche 8 bis 10, dadurch gekennzeichnet, daß die Querwand eine Scheibe (116) aufweist und daß an beiden Seiten der Scheibe zwei mit ihrer Achse im wesentlichen konzentrische, flexible Abdeckscheiben (118, 119) angeordnet sind, von denen je nach der Richtung der Relativbewegung zwischen den beiden Teilen des Fahrzeugs jeweils eine durch elastische Verformung in abdichtende Anlage an der entsprechenden Seite (116a, 116b) der Scheibe bringbar ist.

12. Stoßdämpfer nach Anspruch 11, dadurch gekennzeichnet, daß die einander entgegengesetzten Stirnflächen (116a, 116b) der Scheibe (116) im axialen Schnitt jeweils ein gekrümmtes Profil haben, welches dem Profil der unter elastischer Verformung daran in Anlage befindlichen Abdeckscheibe (118, 119) angepaßt ist.

0 003 458

FIG.3

FIG.4

2

FIG.6

FIG.7

FIG.8

0 003 458

FIG.5

FIG.9

FIG.10